# EUROPEAN PATENT APPLICATION

(11) **EP 4 438 370 A1**
(43) Date of publication of application: **02.10.2024**
(21) Application number: 22898034.8
(22) Date of filing: 19.11.2022
(51) Int. Cl.: B60K 17/04, B60K 17/06, B60K 17/02, B60K 17/24, B60K 17/34, B60T 13/74

(54) **WORK VEHICLE AND DRIVING EXTRACTION DEVICE OF WORK VEHICLE**

(30) Priority: 23.11.2021 KR 20210162838
(71) Applicant: Jinmyung Powertech Co., Ltd., Siheung-si, Gyeonggi-do 15117 (KR)
(72) Inventor: MATSUFUJI, Mizuya, Hyogo 669-1547 (JP); HONG, Sung Jin, Incheon 22003 (KR); LEE, Hyang Hui, Incheon 22810 (KR)
(74) Representative: Mewburn Ellis LLP
(86) International application number: PCT/IB2022/061173
(87) International publication number: WO 2023/094956

(57) **Abstract**

A work vehicle including a driving source, first driving wheels, second driving wheels, a transmission transmitting power from the driving source to the first driving wheels, and a first brake for stopping the first driving wheels includes a driving extraction device attached to the transmission, extracting power from the transmission, and selectively transmitting power to the second driving wheels, in which the driving extraction device may include an extraction housing provided outside the transmission, an extraction clutch selectively transmitting power from the transmission to an output shaft connected with the second driving wheels, and a second brake for stopping the output shaft.

## Description

### [Technical Field]

The present disclosure relates to a power extraction device that enables a switch from four-wheel driving to two-wheel driving of a work vehicle, and a work vehicle including the power extraction device.

### [Background Art]

A work vehicle may mean a vehicle that can additionally perform work for convenience of human life in a vehicle for moving. A work vehicle can function as a transport device that moves workers to specific positions using a driving source such as an engine and can use the power from a driving source for purposes other than running while moving with workers or maintaining a stop state at specific positions.

As general work vehicles, there may be agricultural work vehicles such as a combine or a tractor and there may also be work vehicles that perform different kinds of work at a construction site, a factory, or the like.

Referring to Japanese Patent No. 940195, a work vehicle including a PTO has been disclosed therein. The work vehicle includes an engine, a transmission, and a PTO device, in which a portion of power from the engine is transmitted to driving wheels, etc. and used for running and the other is transmitted to the PTO device, etc. and can be used for purposes other than running.

The transmission includes a front housing, a transmission housing, and a rear housing, and includes, therein, a running power transmission unit that transmits power from the engine to the driving wheel, etc. and a PTO power transmission unit for work other than running. As the running power transmission unit, a switching unit, a main shifting unit, and a sub-shifting unit are included. The switching unit is positioned at the front housing, the main shifting unit and the sub-shifting unit are positioned at the transmission housing, and a front-wheel driving case is positioned under the transmission housing, whereby it is possible to selectively transmit power to a transmission shaft. A pulley for a parking brake is installed at the transmission housing at which the sub-shifting unit is positioned, and an function as a parking brake.

### [Disclosure]

### [Technical Problem]

The present disclosure provides a work vehicle in which a parking brake is positioned at a power extraction device so that the parking brake can closely operate with the power extraction device, and provides a power extraction device.

The present disclosure provides a work vehicle in which a transmission can be made more compact by disposing a parking brake at a power extraction device rather than the transmission and a brake and an extraction clutch are operated with each other at the power extraction device that is relatively not influenced by a size, and provides a power extraction device.

The present disclosure provides a work vehicle that enables maintenance through a power extraction device without separating a transmission even though a failure is generated by a parking brake by disposing the parking brake at the power extraction device, and provides a power extraction device.

### [Technical Solution]

According to an exemplary embodiment of the present disclosure for achieving the objectives of the present disclosure described above, a work vehicle including a driving source, first driving wheels, second driving wheels, a transmission transmitting power from the driving source to the first driving wheels, and a first brake for stopping the first driving wheels includes a driving extraction device attached to the transmission, extracting power from the transmission, and selectively transmitting power to the second driving wheels, in which the driving extraction device includes an extraction housing provided outside the transmission, an extraction clutch selectively transmitting power from the transmission to an output shaft connected with the second driving wheels, and a second brake for stopping the output shaft.

The second brake may be used as a parking brake, etc., it is possible to reduce the size of the transmission and simplify the internal structure of the transmission by mounting the second brake on the driving extraction device rather than the transmission, and it is possible to make maintenance easy and it is possible to easily design the interactive linking operation between the driving extraction device and the second brake by positioning the second brake at the driving extraction device disposed outside the transmission.

In this embodiment, the extraction clutch, the output shaft, and the second brake may be accommodated or coupled in the extraction housing.

The extraction clutch may be used mainly to switch to a two-wheel mode or a four-wheel mode, and a dog clutch, etc. may be used. In particular, even though it is the two-wheel mode, when the second brake is moved to a position at which it can retrain the second driving wheels, it is possible to easily perform the linking operation of forcing the adjacent extraction clutch to switch to the four-wheel mode.

In a structure in which the driving extraction device can be mounted or separated, a driving extraction gear may be exposed on the outer surface of the transmission and the driving extraction device may be connected with the driving extraction gear through a process of mounting the extraction housing on the transmission.

In correspondence to the driving extraction gear, the driving extraction device may further include a hollow extraction gear rotating around an output connected to the second driving wheels. In addition, the hollow extraction gear may transmit rotation to the output shaft through the extraction clutch. Accordingly, power transmitted to the hollow extraction gear is transmitted to the output shaft through the extraction clutch in the four-wheel mode, but, in the two-wheel mode, the extraction clutch is disengaged, so power is not transmitted to the output shaft and the output shaft may be manually rotated as the work vehicle runs.

In this structure, the second brake may first friction plates retained on an outer surface of the extraction gear, second friction plates retained on an inner surface of the extraction housing, and a second brake actuator controlling coupling between the first friction plates and the second friction plates.

The second friction plates may be retained on the inner surface of the extraction housing by spline coupling and an outer surface of the second brake actuator is also retained by the same spline coupling.

In detail, the second brake actuator may include a fixed plate fixed to the inner surface of the extraction housing by spline coupling, a rotary plate facing the fixed plate, and at least three balls disposed between the rotary plate and the fixed plate, in which the fixed plate and the second friction plates have the same spline outer diameter, and the second friction plates, the first friction plates, and the rotary plate, balls, and fixed plate of the second brake actuator may be sequentially assembled at a side of the extraction housing.

In the second brake actuator, the rotary plate can adjust a gap between the first friction plates and the second friction plates while rotating with respect to the fixed plate.

According to an exemplary embodiment of the present disclosure for achieving the objectives of the present disclosure described above,

A driving extraction device can be applied to a work vehicle including a driving source, first driving wheels, second driving wheels, a transmission transmitting power from the driving source to the first driving wheels, and a first brake for stopping the first driving wheels, may include, as components, an extraction housing provided outside the transmission, an extraction clutch selectively transmitting power from the transmission to an output shaft connected with the second driving wheels, and a second brake for stopping the output shaft, in which the driving extraction device is attached to the transmission, extracts power from the transmission, and can selectively transmit power to the second driving wheels.

In the driving extraction device, the extraction clutch, the output shaft, and the second brake may be accommodated or coupled in the extraction housing, the extraction clutch may be used mainly to switch to a two-wheel mode or a four-wheel mode, and when the second brake is moved to a position at which it can retain the second driving wheels, adjacent extraction clutch may be switched to a mode in which it is forcibly coupled.

In correspondence to the driving extraction gear of the transmission, the driving extraction device may further include a hollow extraction gear rotating around an output connected to the second driving wheels. Power transmitted to the hollow extraction gear is transmitted to the output shaft through the extraction clutch with the extraction clutch connected, whereby the four-wheel mode can be maintained. Further, power from the hollow extraction gear is not transmitted to the output shaft with the extraction clutch disengaged, whereby the two-wheel model can be maintained.

The second clutch can stop the hollow extraction gear or the output shaft with respect to the extraction housing. According to an embodiment, the second brake may include first friction plates retained on an outer surface of the extraction gear, second friction plates retained on an inner surface of the extraction housing, and a second brake actuator controlling coupling between the first friction plates and the second friction plates.

### [Advantageous Effects]

In the work vehicle and the driving extraction device of the present disclosure, the second brake and the extraction clutch are positioned in the same housing, so it is possible to closely link the operation of the second brake and the operation of the extraction clutch to each other.

In the work vehicle and the driving extraction device of the present disclosure, the second brake is mounted on the driving extraction device rather than the transmission, so it is possible to reduce the size of the transmission and simplify the internal structure of the transmission, and it is possible to make maintenance easy and it is possible to easily design the interactive linking operation between the driving extraction device and the second brake by positioning the second brake at the driving extraction device disposed outside the transmission.

According to the work vehicle and the driving extraction device of the present disclosure, it is possible to perform maintenance by separating the driving extraction device without disassembling the transmission even though a failure is generated by the second brake.

### [Description of Drawings]

FIG. 1 is a view illustrating a work vehicle and a power extraction device according to an embodiment of the present disclosure.
FIG. 2 is a view illustrating a power transmission structure of the work vehicle according to an embodiment of the present disclosure.
FIGS. 3 and 4 are views illustrating the power extraction device of the work vehicle according to an embodiment of the present disclosure.
FIGS. 5 and 6 are views illustrating a second brake of the work vehicle according to an embodiment of the present disclosure.

### [Mode for Invetion]

Hereafter, preferred embodiments of the present disclosure will be described in detail with reference to the accompanying drawings, but the present disclosure is not limited or restricted to the embodiments. For reference, the same reference numerals substantially indicate the same components in the description, it is possible to refer to the matters shown in other figures under this rule, and matters that are determined as being apparent or repetitive to those skilled in the art may be omitted.

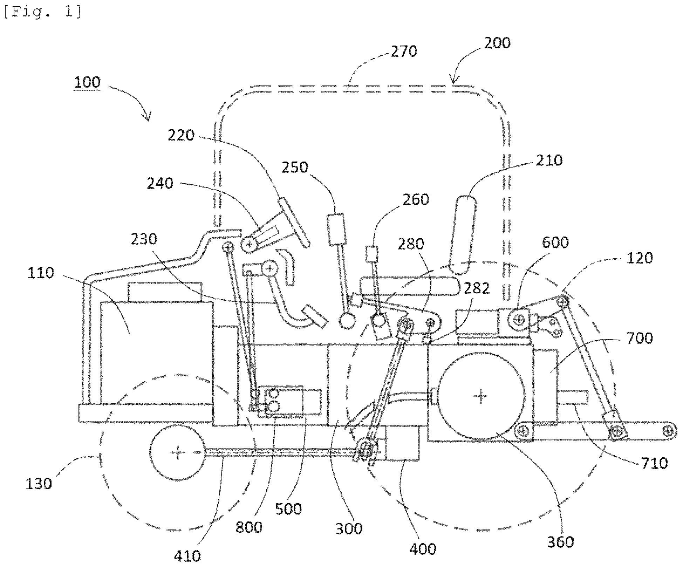

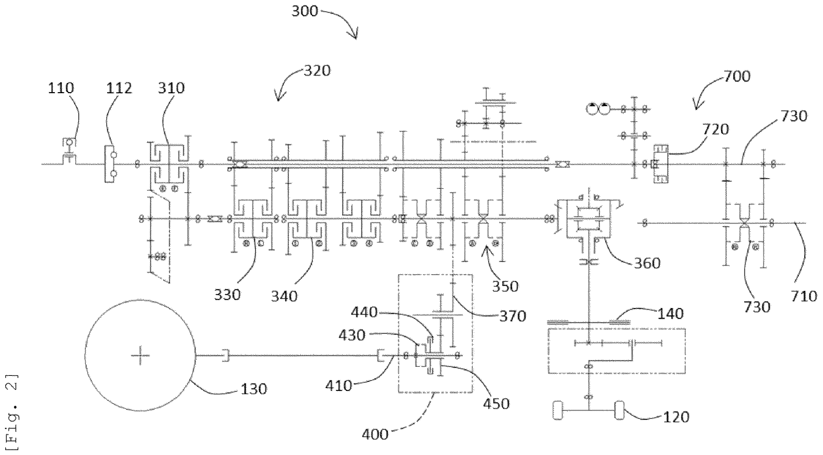

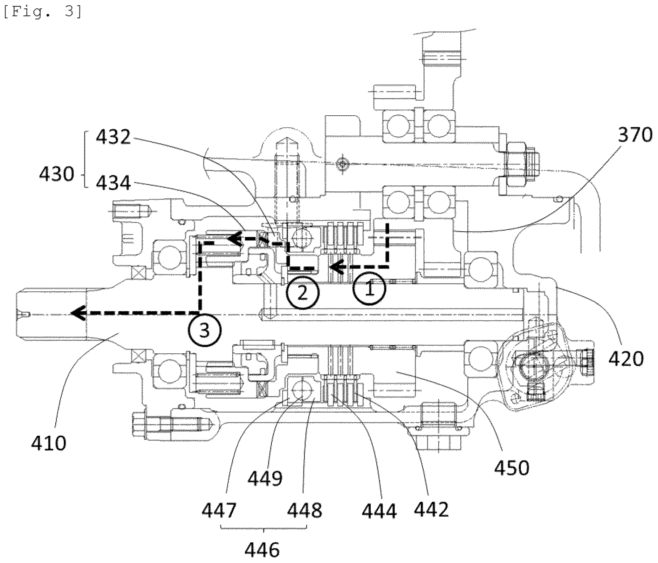

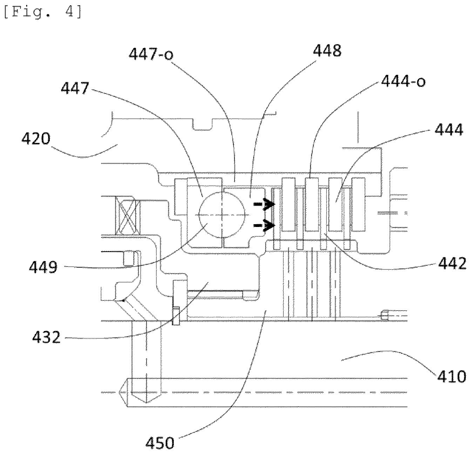

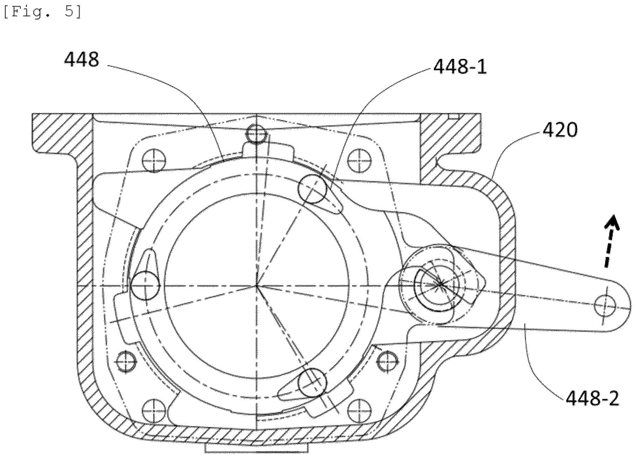

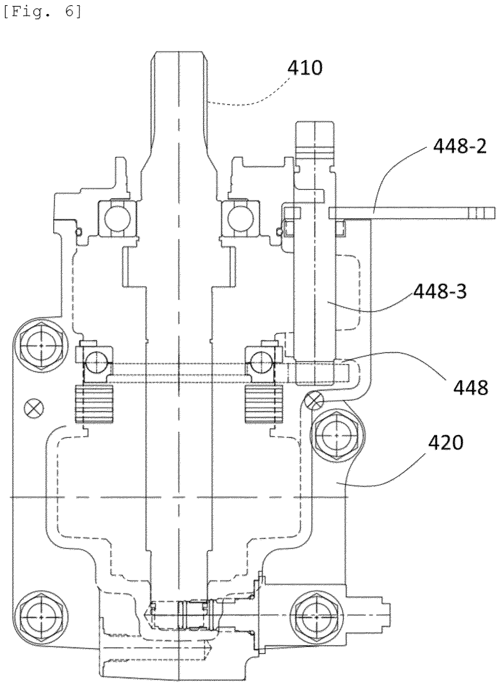

FIG. 1 is a view illustrating a work vehicle and a power extraction device according to an embodiment of the present disclosure, FIG. 2 is a view illustrating a power transmission structure of the work vehicle according to an embodiment of the present disclosure, FIGS. 3 and 4 are views illustrating the power extraction device of the work vehicle according to an embodiment of the present disclosure, and FIGS. 5 and 6 are views illustrating a second brake of the work vehicle according to an embodiment of the present disclosure.

Referring to FIGS. 1 to 6, a work vehicle 100 according to this embodiment may include a driving source 110, rear wheels or first driving wheels 120, front wheels or second driving wheels 130, a user driving section 200, a transmission 300, a power extraction device 400, a hydraulic shifting valve device 500, a hydraulic PTO valve device 600, and a PTO device 700.

The driving source 110 such as an engine generates power and power from the driving source 110 is shifted or controlled through the transmission 300 and can be used for running or work other than running.

The transmission 300 can transmit the entire or a portion of power transmitted from the driving source 110 to the first driving wheels 120 or the second driving wheels 130 for running, and power for work other than running can be transmitted to the PTO device 700. The power transmitted to the PTO device 700 can be transmitted from the driving source 110 that is an engine without shifting and rotation is possible at 540rpm, 1000rpm, or at a rotation speed (GSP) proportioned to a running speed with the driving source 110 generating maximum or optimum torque. Shifting in the PTO device 700 may be performed by a shift clutch 730, etc.

The user driving section 200 may include a driver seat 210, a steering handle 220, a clutch pedal 230, a forward/backward operation unit 240, a main shifting operation unit 250, and a sub-shifting operation unit 260. A user can control the running direction of the work vehicle 100 through the handle 220, can control the rotation direction of the driving wheels through the forward/backward operation unit 240, and can control the shift stages, shift ranges, or the like through the main shifting operation unit 250 and the sub-shifting operation unit 260.

The clutch pedal 230 may be positioned at left side under the handle 220, a brake pedal may be provided at the right side, and a parking brake 280 may be provided under the driver seat 210. The brake pedal may be connected with a valve of a brake system that is operated by hydraulic pressure, and as the brake pedal is operated, a first brake 140 to be described below can be operated.

In this embodiment, the user driving section 200 may be provided in an exposed type, but, depending on cases, it may include a cabin 270.

The forward/backward operation unit 240, the main shifting operation unit 250, or the sub-shifting operation unit 260 can adjust combinations of shift gears through a hydraulic shifting valve device 500, and in this process, operation types of a hydraulic type, an electric type, a manual type, or the like may be used.

Power that has passed through the transmission 300 can be transmitted to the rear wheels, that is, the first driving wheels 120 through a first differential 360. Depending on cases, it is possible to extract a portion of power to a front-wheel output shaft 410 and transmit it to the front wheels, that is, the second driving wheels 130 through the driving extraction device 400. When the second driving wheels 130 receive power together with the first driving wheels 120 through the power extraction device 400, the work vehicle 100 can run in a four-wheel mode and the four-wheel mode can be usefully applied to move the work vehicle 100 on rough terrain, a rice field, a dry field, or the like. However, it may be efficient to run in a two-wheel mode rather than a four-wheel mode when running on a common road, etc., and in this case, the power extraction device 400 can switch to a two-wheel mode, in which the second driving wheels 130 are manually rotated, without transmitting power to the front-wheel output shaft 410.

The first brake 140 may be mounted between the first differential 360 and the first driving wheels 120. The first brake 140 can stop the work vehicle 100 by suppressing rotation of the first driving wheels 120 that mainly contribute to running. For reference, a pedal for operating the first brake 140 may be provided in the user driving section 200 and may be provided at a side or both sides of the driver seat.

Power from the engine can be connected to the first driving wheels 120, the second driving wheels 130, the PTO device 700, or the like through the transmission 300, and a switching unit 310, a main shifting unit 320, a sub-shifting unit 350, the first differential 360, etc. may be provided in the transmission 300.

Referring to FIG. 2, power from the driving source 110 can be applied to forward movement or backward movement through the switching unit 310 and the main shifting unit 320 may include a high-speed/low-speed hydraulic clutch 330 and a main shifting hydraulic clutch 340 that can adjust gear states from a first stage to a fourth stage. The sub-shifting unit 350 can additionally adjust a shifting section in rotation of shifted by the main shifting unit 320, and, as shown in the figure, can control a section A, B, C, or Cr (creep) using the shift clutch.

In this embodiment, the high-speed/low-speed hydraulic clutch 330 and the main shifting hydraulic clutch 340, which are hydraulic clutches using a friction plate, can be controlled by the hydraulic shifting valve device 500, and the shift clutch of the sub-shifting unit 350 can be operated in an electric type or a hydraulic type. The transmission 300 according to this embodiment can shift up to 24 steps or 32 steps by the main shifting unit 320 and the sub-shifting unit 350.

Power from the engine may be transmitted to the PTO device 700 without passing through the switching unit 310, the main shifting unit 320, or the like, and power transmitted to the POT device 700 can drive a tandem pump, etc. and may drive a PTO output shaft 710 through the hydraulic PTO valve device 600. Power can be transmitted to the PTO output shaft 710 through a PTO clutch 720 and a PTO shift clutch 730 in the PTO device 700.

A gear for extracting power to the outside may be mounted on the shaft on which the shift clutch is mounted in the sub-shifting unit 350, and a driving extraction gear 370 is provided at an end thereof. The driving extraction gear 370 may be partially exposed from the housing of the transmission 300 and the driving extraction device 400 may be mounted in the region in which the driving extraction gear 370 is exposed.

The driving extraction device 400 can transmit power transmitted from the transmission 300 to the second driving wheels 120 through the front-wheel output shaft 410. The driving extraction device 400 may include an extraction housing 420, an extraction clutch 430, and a second brake 440, and the extraction clutch 430 can connect/disconnect power that is transmitted to the front-wheel output shaft 410 from the transmission 300. In this configuration, the extraction clutch 430 may be provided using a dog clutch, etc.

The second brake 440 can be used as a parking brake of the work vehicle and may be mounted in the extraction housing 430 rather than a transmission housing. Accordingly, when the second brake is omitted, it is possible to reduce the size of the transmission 300 itself and simplify the internal structure of the transmission 300.

Further, since the second brake 440 is positioned in the extraction housing 420, it is possible to apply various brake structures, which could not be applied to transmissions, without a burden of size, and it is possible to improve the linkage function of the second brake 440 and another device, for example, the extraction clutch 430.

In this embodiment, the driving extraction device 400 includes a hollow extraction gear 450 corresponding to the driving extraction gear 370 and rotating around the front-wheel output shaft 410, and the second brake 440 is provided between the hollow extraction gear 450 and the extraction housing 420. The second brake 440 includes a plurality of first friction plates 442 retained on the outer surface of the hollow extraction gear 450, a plurality of second friction plates 444 retained on the inner surface of the extraction housing 420, and a second brake actuator 446 controlling the gap between the first friction plates 442 and the second friction plates 444.

The second brake actuator 446 includes a fixed plate 447 positioned ahead of the first friction plates 442 and the second friction plates 444 and fixed to the extraction housing 420, a rotary plate 448 facing the fixed plate 447, and at least three balls 449 disposed between the rotary plate 448 and the fixed plate 447. The fixed plate 447 or the rotary plate 448 may have inclined accommodation grooves or water drop-shaped accommodation grooves 448-1 that accommodate the balls 449, the balls 449 can move along the inclined accommodation grooves or the water drop-shaped accommodation grooves 448-1 when the rotary plate 448 is rotated, and the gap between the fixed plate 447 and the rotary plate 448 can be increased by the three balls 449.

When the rotary plate 448 is rotated, the gap between the rotary plate 448 and the fixed plate 447 is increased by the balls 449 and the rotary plate 448 moves relatively toward the first friction plates 442 and the second friction plates 444, thereby being able to bring the friction plates in close contact with each other. The friction plates 442 and 444 may be alternately stacked and are in close contact with each other, thereby being able to generate strong frictional coupling.

Referring to FIGS. 5 and 6, in this embodiment, a brake lever 448-2 connected with the parking brake can be pulled up to operate the rotary plate 448, the brake lever 448-2 includes a lever shaft 448-3, and a cam is formed at an end of the lever shaft 448-1, thereby being able to lift a supporting protrusion of the rotary plate 448.

When the brake lever 448-2 is lifted in correspondence to the parking brake, the lever shaft 448-3 is rotated clockwise, whereby the rotary plate 448 can be rotated counterclockwise.

In particular, as shown in FIG. 6, the lever shaft 448-3 is integrally formed with the brake lever 448-2 and can be moved inside parallel with the output shaft 410 from the front of the extraction housing 420. The brake lever 448-2 is formed ahead of the extraction housing 420, so it is possible to minimize protrusion to a side. Further, the brake lever 448-2 is formed in the same direction as an opening for forming the output shaft 410 in the extraction housing 420, thereby enabling easy formation of the extraction housing 420.

When the first friction plates 442 and the second friction plates 444 are brought in close contact with each other by the second brake actuator 446, rotation of the hollow extraction gear 450 can be restricted, and rotation of the front-wheel output shaft 410 can be restricted by relative large friction force because many friction plates are used.

The extraction clutch 430 of the driving extraction device 400 may be used to switch to a two-wheel mode or a four-wheel mode when the work vehicle is driven. The extraction clutch 430 may include a first dog clutch 432 operating with the hollow extraction gear 450 and a second dog clutch 434 operating with the front-wheel output shaft 410, and as a piston is moved by hydraulic pressure, coupling between the first dog clutch 432 and the second dog clutch 434 can be restricted.

The extraction clutch 430 can switch to a two-wheel mode or a four-wheel mode when the work vehicle 100 is stopped, and the work vehicle 100 can be operated in the two-wheel mode when the first dog clutch 432 and the second dog clutch 434 of the extraction clutch 430 are separated, and the work vehicle 100 can be operated in the four-wheel mode when the first dog clutch 432 and the second dog clutch 434 are coupled.

However, in the driving extraction device 400 according to this embodiment, it is preferable that even though it is the two-wheel mode, the extraction clutch 430 that is operated by hydraulic pressure is also automatically coupled when the second brake 440 operates and stops the hollow extraction gear 450. In this embodiment, the extraction clutch 430 is positioned close to the second brake 440, and when the second brake 440 operates for stopping, the extraction clutch 430 can also be automatically operated.

Further, as in FIG. 1, an operation sensor 282 is mounted on the parking brake 280, so it is possible to check whether the second brake 440 is operated. The operation sensor 282 can be maintained in an ON state, and can be switched to an OFF state when the parking brake 280 is operated.

As shown in FIG. 4, a spline groove is formed on the inner surface of the extraction housing 420 and splines may be formed on the outer surfaces of the second friction plates 444 and the fixed plate 447 as well so that the second friction plates 444 and the fixed plate 447 are coupled to the extraction housing 420. The spline outer diameter 447-o of the fixed plate 447 and the spline outer diameter 440-o of the second friction plates 444 may be the same, and the second friction plates 444, the first friction plates 442, and the rotary plate 448, balls 449, and fixed plate 447 of the second brake actuator 446 may be sequentially assembled along the front-wheel output shaft 410 at an open one side of the extraction housing 420.

Although exemplary embodiments of the present disclosure were described above with reference to the drawings, it should be understood that the present disclosure may be changed and modified in various ways by those skilled in the art without departing from the spirit and scope of the present disclosure described in claims.

**[Description of Reference Numerals]**

| | | | |
|---|---|---|---|
| 100 : | work vehicle | 110 : | driving source |
| 120 : | first driving wheel | 130 : | second driving wheel |
| 140 : | first brake | 200 : | user driving section |
| 300 : | transmission | 310 : | switching unit |
| 320 : | main shifting unit | 330 : | highspeed/low-speed hydraulic clutch |
| 340 : | main shifting hydraulic clutch | | 350 : sub-shifting unit |
| 400 : | driving extraction device | 410 : | front-wheel output shaft |
| 420 : | extraction housing | 430 : | extraction clutch |
| 440 : | second brake | 450 : | hollow extraction gear |
| 500 : | hydraulic shifting valve device | 600 : | hydraulic PTO valve device |
| 700 : | PTO device | | |

## Claims

1. A work vehicle that comprises a driving source, first driving wheels, second driving wheels, a transmission transmitting power from the driving source to the first driving wheels, and a first brake for stopping the first driving wheels, the work vehicle comprising a driving extraction device attached to the transmission, extracting power from the transmission, and selectively transmitting power to the second driving wheels,
wherein the driving extraction device comprises:
an extraction housing attached to the transmission;
an extraction clutch selectively transmitting power from the transmission to an output shaft connected with the second driving wheels; and
a second brake for stopping the output shaft.

2. The work vehicle of claim 1, wherein the extraction clutch and the second brake are accommodated in the extraction housing.

3. The work vehicle of claim 1, wherein the extraction clutch is switched to a two-wheel mode or a four-wheel mode, and when the second brake is moved to a position at which the second brake retains the second driving wheels, the extraction clutch is simultaneously switched to the four-wheel mode.

4. The work vehicle of claim 1, wherein the driving extraction device further comprises a hollow extraction gear connected with the driving extraction gear and rotating around the output shaft, and
the second brake comprises first friction plates retained on an outer surface of the hollow extraction gear, second friction plates retained on an inner surface of the extraction housing, and a second brake actuator controlling coupling between the first friction plates and the second friction plates.

5. The work vehicle of claim 4, wherein the second friction plates are retained on the inner surface of the extraction housing by spline coupling and an outer surface of the second brake actuator is also retained by the same spline coupling.

6. The work vehicle of claim 5, wherein the second brake actuator comprises a fixed plate fixed to the inner surface of the extraction housing by the spline coupling, a rotary plate facing the fixed plate, and at least three balls disposed between the rotary plate and the fixed plate,
the fixed plate and the second friction plates have the same spline outer diameter, and
the rotary plate adjusts a gap between the first friction plates and the second friction plates while rotating with respect to the fixed plate.

7. The work vehicle of claim 6, wherein a brake lever for rotating the rotary plate comprises a lever shaft operating with the rotary plate, and the lever shaft is moved inside and assembled parallel with the output shaft connected with the second driving wheels from a front of the extraction housing.

8. A driving extraction device for a work vehicle that comprises a driving source, first driving wheels, second driving wheels, a transmission transmitting power from the driving source to the first driving wheels, and a first brake for stopping the first driving wheels, the driving extraction device comprising:
an extraction housing provided outside the transmission;
an extraction clutch selectively transmitting power from the transmission to an output shaft connected with the second driving wheels; and
a second brake for stopping the output shaft,
wherein the driving extraction device is attached to the transmission, extracts power from the transmission, and selectively transmits power to the second driving wheels.

9. The driving extraction device of claim 8, wherein the extraction clutch and the second brake are accommodated in the extraction housing.

10. The driving extraction device of claim 8, wherein the extraction clutch is switched to a two-wheel mode or a four-wheel mode, and when the second brake is moved to a position at which the second brake retains the second driving wheels, the extraction clutch is forcibly switched to the four-wheel mode.

11. The driving extraction device of claim 8, further comprising a hollow extraction gear connected with the driving extraction gear and rotating around the output shaft,
wherein the second brake comprises first friction plates retained on an outer surface of the extraction gear, second friction plates retained on an inner surface of the extraction housing, and a second brake actuator controlling coupling between the first friction plates and the second friction plates.

12. The driving extraction device of claim 11, wherein the second friction plates are retained on the inner surface of the extraction housing by spline coupling and an outer surface of the second brake actuator is also retained by the same spline coupling.

13. The driving extraction device of claim 12, wherein the second brake actuator comprises a fixed plate fixed to the inner surface of the extraction housing by the spline coupling, a rotary plate facing the fixed plate, and at least three balls disposed between the rotary plate and the fixed plate,
the fixed plate and the second friction plates have the same spline outer diameter, and
the rotary plate adjusts a gap between the first friction plates and the second friction plates while rotating with respect to the fixed plate.

14. The driving extraction device of claim 13, wherein a brake lever for rotating the rotary plate comprises a lever shaft operating with the rotary plate, and the lever shaft is moved inside and assembled parallel with the output shaft connected with the second driving wheels from a front of the extraction housing.
